## Europäisches Patentamt

## European Patent Office

## Office européen des brevets

(19)

(11) Veröffentlichungsnummer: **0 019 838**
**B1**

(12)

# EUROPÄISCHE PATENTSCHRIFT

(45) Veröffentlichungstag der Patentschrift:
**25.01.84**

(51) Int. Cl.³: **H 04 M 1/05,** H 04 R 1/10

(21) Anmeldenummer: **80102802.8**

(22) Anmeldetag: **21.05.80**

(54) An einem Schutzhelm lösbar befestigbare Hörsprechgarnitur.

(30) Priorität: **26.05.79 DE 2921434**

(43) Veröffentlichungstag der Anmeldung:
**10.12.80 Patentblatt 80/25**

(45) Bekanntmachung des Hinweises auf die Patenterteilung:
**25.01.84 Patentblatt 84/4**

(84) Benannte Vertragsstaaten:
**AT BE CH DE FR GB LI NL SE**

(56) Entgegenhaltungen:
**CA - A - 936 921**
**DE - A - 2 229 965**
**DE - B - 1 079 676**
**FR - A - 1 231 425**
**FR - A - 2 078 332**
**FR - A - 2 325 249**
**GB - A - 607 239**
**GB - A - 1 144 294**

(73) Patentinhaber: **Peiker, Andreas, Gartenstrasse 23-27,**
**D-6380 Bad Homburg v.d. Höhe (DE)**

(72) Erfinder: **Peiker, Heinrich, Gartenstrasse 23-27,**
**D-6380 Bad Homburg v.d. Höhe (DE)**

(74) Vertreter: **Keller, Hartmut et al, Hartmut Keller Dr. René**
**Keller Postfach 12, CH-3000 Bern 7 (CH)**

ACTORUM AG

## An einem Schutzhelm lösbar befestigbare Hörsprechgarnitur

Die Erfindung bezieht sich auf eine an einem Schutzhelm lösbar befestigbare Hörsprechgarnitur der im Oberbegriff des Patentanspruchs 1 angegebenen Gattung.

Es ist eine Hörsprechgarnitur dieser Gattung bekannt (GB-PS 1 144 294), bei der das Halteelement ein um die Aussenseite der Helmrandzone gelegtes elastisches Band ist, das an seiner Aussenseite einander gegenüber eine mit einer Mikrofonkapsel zusammengebaute Hörkapsel und eine zweite Hörkapsel trägt, diese Kapseln in zur Helmrandzone radialer Richtung sichert und infolge des Kraftschlusses in Umfangsrichtung der Helmrandzone unverschiebbar hält. Weitere Haltemittel sichern die Kapseln in vertikaler Richtung, indem die Helmkante eine nach aussen vorstehende Krempe hat, auf die sich die Kapseln stützen, so dass diese Krempe das Gewicht der Garnitur trägt. Ein an den Kapseln vorgesehener Vorsprung greift unter die Krempe, so dass die Wandlergehäuse auch in Richtung nach oben formschlüssig gesichert und dadurch das Band auch daran gehindert ist, im Falle einer konisch nach oben verjüngten Helmrandzone nach oben zu gleiten. Die Wandlergehäuse sind somit in radialer und axialer Richtung der Helmrandzone, insbesondere in Richtung der Schwerkraft der Garnitur, formschlüssig und in Umfangsrichtung der Helmrandzone kraftschlüssig gesichert. Dabei trägt der Kraftschluss zum Tragen des Gewichts der Garnitur nichts bei. Jede Hörkapsel ist mit einer vor einem Ohr des den Helm mit der Hörsprechgarnitur tragenden Benutzers anzuordnenden Hörmuschel durch einen Schalleiter verbunden, der unelastisch biegsam ist, so dass die Muscheln in die gewünschten Lagen vor den Ohren gebracht werden können und in diesen Lagen bleiben. Entsprechend ist die Mikrofonkapsel mit einem Schalleiter verbunden, der unelastisch biegsam ist, so dass sein freies, offenes Ende in die gewünschte Lage vor dem Mund des Benutzers gebracht werden kann und in dieser Lage bleibt.

Es ist auch eine Hörsprechgarnitur bekannt, die nicht an einem Helm lösbar befestigbar, sondern in einem zum Zusammenbau mit der Garnitur und mit einem Sprechfunksender und -empfänger besonders gestalteten Helm eingebaut ist (CA-PS 936 921), bei der zwei Hörkapseln an der Innenseite der an beiden Seiten des Kopfes des Benutzers bis unter dessen Kinn verlängerten Helmschale so angeordnet sind, dass sie bei normaler Lage der Ohren des Benutzers je vor einem Ohr zu liegen kommen, und unterhalb einer der Hörkapseln ist ein starrer, auf- und abwärts schwenkbarer Arm an der nach unten verlängerten Helmschale angelenkt. Der Sprechfunksender und -empfänger ist im oberen Teil des Helmes untergebracht und die Antenne erstreckt sich an der Aussenseite des Helmes von einer der unteren Verlängerungen der Helmschale über deren Scheitel bis zur anderen. Bedienungselemente sind am vorderen unteren Ende einer der Verlängerungen der Helmschale angeordnet.

Ferner ist eine nicht an einem Helm lösbar befestigbare, sondern an einem Kopfbügel, insbesondere Ohrbügel befestigte Hörsprechgarnitur mit einer vor einem Ohr zu tragenden Hörkapsel und einer mit einem starren Schalleiter verbundenen Mikrofonkapsel bekannt (DE-AS 1 079 676), bei der zur Einstellung der Lage der Hörkapsel und der Mikrofonkapsel zwei Arme in einer parallel zu der durch die Ohrseite des Kopfes bestimmten Ebene schwenkbar sind. Ein Arm trägt die Hörkapsel, am anderen ist die Mikrofonkapsel mit dem Schalleiter um eine zur Schwenkachse der beiden Arme parallele Achse drehbar gelagert.

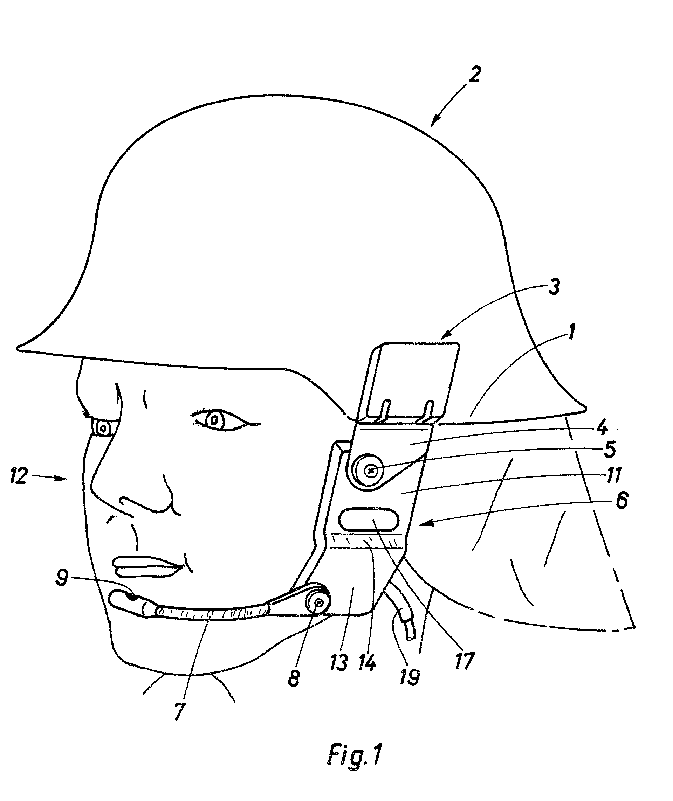

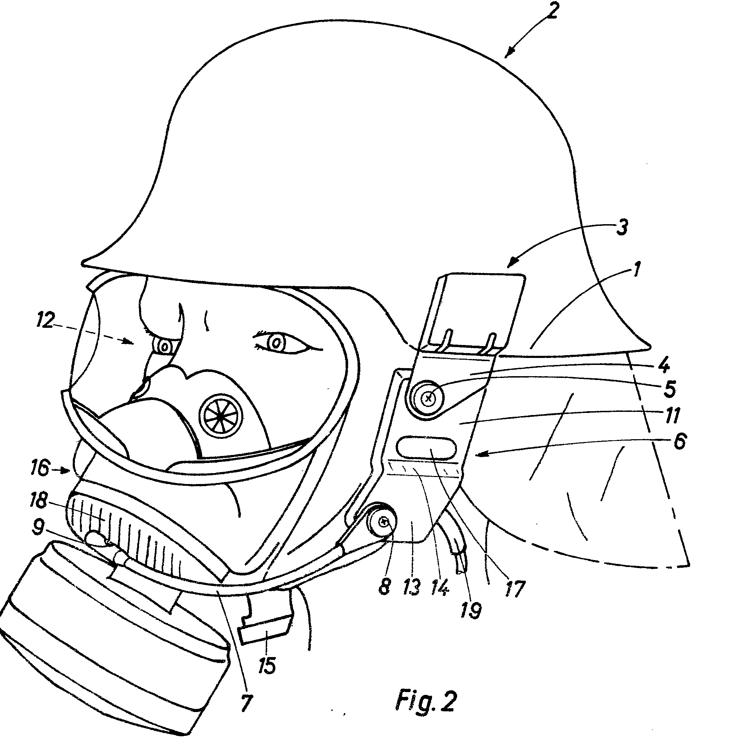

Die bekannte, an einem Schutzhelm lösbar befestigbare Hörsprechgarnitur (GB-PS 1 144 294) ist nur an Helmen brauchbar, die zwei Voraussetzungen erfüllen: Der Helmrand muss einen aussen vorstehenden Vorsprung (Krempe) haben, und er darf nicht vorn (zur Vergrösserung des Gesichtsfeldes) höher und hinten (zur Vergrösserung der Schutzzone) tiefer liegen, wie z.B. der in Fig. 1 und 2 vorliegender Anmeldung gezeigte Helm 2. Es ist zeitraubend und umständlich, diese Garnitur mit ihren formschlüssig am Helmrand angreifenden Teilen in der richtigen Lage am Helm so anzubringen, dass die Hörmuscheln vor die Ohren kommen. Da das fest am Helm anliegende Band nicht verschoben werden kann, muss es von vornherein so angelegt werden, dass die Kapseln hinreichend genau an der richtigen Stelle sind. Wenn man – wie bei den wichtigsten Verwendungsgebieten solcher Garnituren auf Baustellen oder in Bergwerken oder bei Öl- oder Gasbohranlagen – Handschuhe, insbesondere grobe Fausthandschuhe trägt, ist die richtige Anbringung dieser Garnitur am Helm kaum möglich. Das gilt auch für das Lösen der Garnitur vom Helm. Wenn der Benutzer der Garnitur mit deren Anschlusskabel an einem Hindernis hängen bleibt, kann er sich aus einer dadurch bedingten Gefahrensituation nur dadurch schnell befreien, dass er den Helm abnimmt, dabei unvermeidbar· auf dessen Schutzwirkung verzichtet.

Hier will die Erfindung Abhilfe schaffen. Die Erfindung, wie sie in den Ansprüchen gekennzeichnet ist, löst die Aufgabe, eine Hörsprechgarnitur zu schaffen, die an einem Schutzhelm, dessen Rand oberhalb der Ohren der ihn benutzenden Person verläuft, leicht und schnell angebracht und gelöst werden kann, ohne dass der Helm zur Verwendung der Hörsprechgarnitur besonders ausgebildet bzw. bearbeitet werden müsste. Dabei soll die Garnitur nicht nur mittels des biegsamen Schalleiters an die Lage des Mundes, sondern auch an die Lage der Ohren der den Helm tragenden Person anpassbar, sowohl ohne als auch mit einer Atemschutzmaske ohne irgendwelche Änderung verwendbar sein, eine gute elektroakustische Übertragungsqualität ermöglichen und den Benutzer nicht behindern. Die Garnitur soll nicht nur schnell lösbar, sondern auch so ausführbar sein, dass sie sich notfalls sogar selbst vom Helm und/oder dass das Anschlusskabel sich von der Garnitur löst, wenn sein Benutzer, z.B. im Feuerwehr- oder Polizeidienst, auf Baustellen oder in Bergwerken oder bei Öl- oder Gasbohranlagen, mit dem Anschlusskabel an einem Hindernis hängen bleibt und dadurch in eine Gefahrensituation kommt, aus der er sich auf andere Weise nicht befreien kann.

Die durch die Erfindung erreichten Vorteile sind im wesentlichen darin zu sehen, dass man die Garnitur, auch wenn man – wie bei wichtigen Anwendungsgebieten auf Baustellen, in Bergwerken oder Öl- oder Gasbohranlagen – Handschuhe, insbesondere Fausthandschuhe trägt, schnell und einfach an einem Schutzhelm üblicher Art anbringen, dabei an die Lage eines Ohres und des Mundes anpassen und ebenso einfach vom Helm lösen, bei entsprechender Ausführung sogar einfach vom Helm wegreissen kann, wobei sie sich sogar von selbst vom Helm löst, wenn man mit ihrem Anschlusskabel an einem Hindernis hängenbleibt und der durch das Halteelement bewirkte Kraftschluss so bemessen werden kann, dass nicht der Helm vom Kopf, sondern die Garnitur vom Helm weggerissen wird, so dass man aus einer durch das Hängenbleiben verursachten Gefahrensituation befreit wird und auch danach durch den Helm geschützt bleibt.

Im folgenden wird die Erfindung anhand von lediglich Ausführungswege darstellender Zeichnung näher erläutert. Es zeigen:

Fig. 1 eine Hörsprechgarnitur an einem Schutzhelm,

Fig. 2 eine der Fig. 1 entsprechende Ansicht, wobei ausser dem Schutzhelm noch eine Atemschutzmaske benutzt wird,

Fig. 3 eine geschnittene Seitenansicht der an den Rand des Helmes geklemmten Befestigungsvorrichtung der Garnitur nach Fig. 1 und 2, in grösserem Massstab,

Fig. 4 eine der Fig. 3 entsprechende Ansicht bei gelöster Befestigungsvorrichtung (Schnitt IV–IV in Fig. 5),

Fig. 5 eine Draufsicht in Richtung des Pfeiles V in Fig. 4 (ohne den Helmrand),

Fig. 6 eine Draufsicht auf eine andere Ausführungsform der an den Rand des Helmes geklemmten Befestigungsvorrichtung,

Fig. 7 einen Schnitt nach der Linie VII–VII in Fig. 6,

Fig. 8 eine Draufsicht auf eine weitere Ausführungsform einer an den Rand eines (in dieser Figur nicht dargestellten) Helmes klemmbaren Befestigungsvorrichtung,

Fig. 9 einen Schnitt nach der Linie IX–IX in Fig. 8, wobei auch der eingeklemmte Helmrand dargestellt ist,

Fig. 10 eine Draufsicht auf eine für einen rinnenförmig gebogenen Rand eines Schutzhelmes ausgeführte Befestigungsvorrichtung,

Fig. 11 einen Schnitt nach der Linie XI–XI in Fig. 10, wobei auch der eingeklemmte Helmrand dargestellt ist.

Nach Fig. 1 und 2 ist an den Rand 1 eines Schutzhelmes 2 eine lösbare Befestigungsvorrichtung 3 geklemmt, die fest mit einer unter dem Helmrand 1 vorstehenden Lasche 4 verbunden ist. Die Lasche 4 ist durch ein einachsiges Drehgelenk 5 mit dem oberen Ende eines Gehäuses 6 verbunden. An das untere Ende des Gehäuses 6 ist ein Schalleiter 7 mittels eines ebenfalls einachsigen Drehgelenks 8 angelenkt. Der Schalleiter 7 ist biegsam, er hat eine die ihm erteilte Biegung selbsthaltende Eigensteifigkeit, an seinem freien Ende hat er eine Einspracheöffnung 9 mit (nicht dargestelltem) Windschutz.

Das Gehäuse hat einen oberen Teil 11, an dessen dem Kopf 12 des Trägers abgewandter äusserer Seite die Lasche 4 anliegt, und einen unteren Teil 13, an dessen dem Kopf 12 abgewandter äusserer Seite der Schalleiter 7 angelenkt ist. Zwischen diesen beiden Gehäuseteilen 11 und 13 ist das Gehäuse 6 bei 14 gekröpft, so dass der untere Teil 13 einen grösseren Abstand vom Kopf 12 hat als der obere 11. Dabei und im folgenden sind «oben» und «unten» auf die Gebrauchslage der Garnitur bezogen, wobei «aussen» die dem Kopf 12 des Trägers des Helms 2 abgewandte Seite und «innen» die ihm zugewandte Seite bezeichnet.

Der obere Gehäuseteil 11 enthält eine (nicht dargestellte) Hörkapsel und hat an seiner Innenseite Schallaustrittslöcher. Der untere Gehäuseteil 13 enthält eine (nicht dargestellte) Mikrofonkapsel, an die der Schalleiter 7 akustisch angeschlossen ist. Die Mikrofonkapsel hat zusammen mit dem Schalleiter 7 einschliesslich Einspracheöffnung 9 einen Frequenzgang, der die Blasgeräusche unterdrückt, die am Ausatemventil 15 einer Atemschutzmaske 16 entstehen, wenn die Garnitur am Helmrand 1 zusammen mit einer Atemschutzmaske verwendet wird, wie Fig. 2 zeigt. An Stelle der Hörkapsel und der Mikrofonkapsel kann bei allen Ausführungswegen der Erfindung eine Kapsel mit einem sowohl zur Schallaufnahme als auch zur Schallwiedergabe dienenden Wandler vorgesehen sein. Oberhalb der Kröpfung 14 enthält das Gehäuse 6 einen Tastschalter, dessen Taste 17 grossflächig und ballig ausgeführt und damit – obwohl dem Benutzer nicht sichtbar – leicht durch Betasten gefunden werden kann, wobei die Kröpfung 14 das Auffinden erleichtert. Die Gelenke 5 und 9 sind entweder selbsthemmend, also mit Drehreibung ausgeführt, oder mit einer Rastvorrichtung versehen, um ein ungewolltes Verstellen zu verhindern.

Durch Verstellen des Gelenkes 5 und Verschieben der Befestigungsvorrichtung 3 längs des Helmrandes 1 können die Schallaustrittsöffnungen an der Innenseite des oberen Gehäuseteiles 11 in die gewünschte, zum Hören günstigste Lage neben den Kopf 12 der den Helm 2 tragenden Person gebracht werden. Dabei hat das Gehäuse 6 einen Abstand vom Kopf 12, so dass diese Person direkten Schall mit beiden Ohren hört und somit auch die Schallquelle lokalisieren kann. Das ist im Einsatz wichtig, um Gefahrenstellen, an deren Geräusche auftreten, oder den Ort der Herkunft von Hilferufen zu lokalisieren. Dies wäre nicht möglich, wenn das Gehäuse 6 am Ohr anliegen würde.

Die Krönung 14 ermöglicht es, den oberen Gehäuseteil 11, der die Hörkapsel enthält, in dem für eine gute Sprechfunkverständigung kleinen Abstand vom Ohr, den unteren Gehäuseteil 13 aber in einem grösseren Abstand vom Kopf 12 der den Helm tragenden Person zu halten. Dieser grössere Abstand verhindert, dass die Garnitur an der Atemschutzmaske 16 hängen bleibt oder deren einwandfreien (dichten) Sitz am Kopf 12 vorübergehend beeinträchtigt oder ein Zurechtrücken derselben erfordert, wenn die Person mit dem Anschlusskabel 19 der Garnitur irgendwo hängen bleibt und die Garnitur, wie weiter unten beschrieben, vom Helm weggerissen wird.

Durch Schwenken (Gelenk 8) und Biegen des Schalleiters 7 kann die Einspracheöffnung 9 in die für die Sprachübertragung günstigste Stellung vor dem Kopf 12 des Trägers des Helms 2 im Bereich des Mundes (Fig. 1) oder bei Verwendung einer Atemschutzmaske 16 mit Sprechmembran 18 vor diese (Fig. 2) oder an eine andere zur Schallaufnahme geeignete Stelle einer Atemschutzmaske, die keine Sprechmembran hat, gebracht werden.

Üblicherweise ist eine Garnitur vorliegender Art an ein separates Sprechfunksende- und -empfangsgerät angeschlossen. Ein solches insbesondere mit kleiner Reichweite, z.B. 50 m, die für verschiedene Einsätze ausreicht, kann jedoch auch in das Gehäuse 6 eingebaut sein, wobei die Antenne im Gehäuse untergebracht oder an diesem angebracht oder mit einer zweiten Befestigungsvorrichtung am Helmrand 1 befestigt werden kann. Für diese Befestigungsvorrichtung gilt das zur Befestigungsvorrichtung 3 bzw. zu deren andern Ausführungsformen Gesagte sinngemäss.

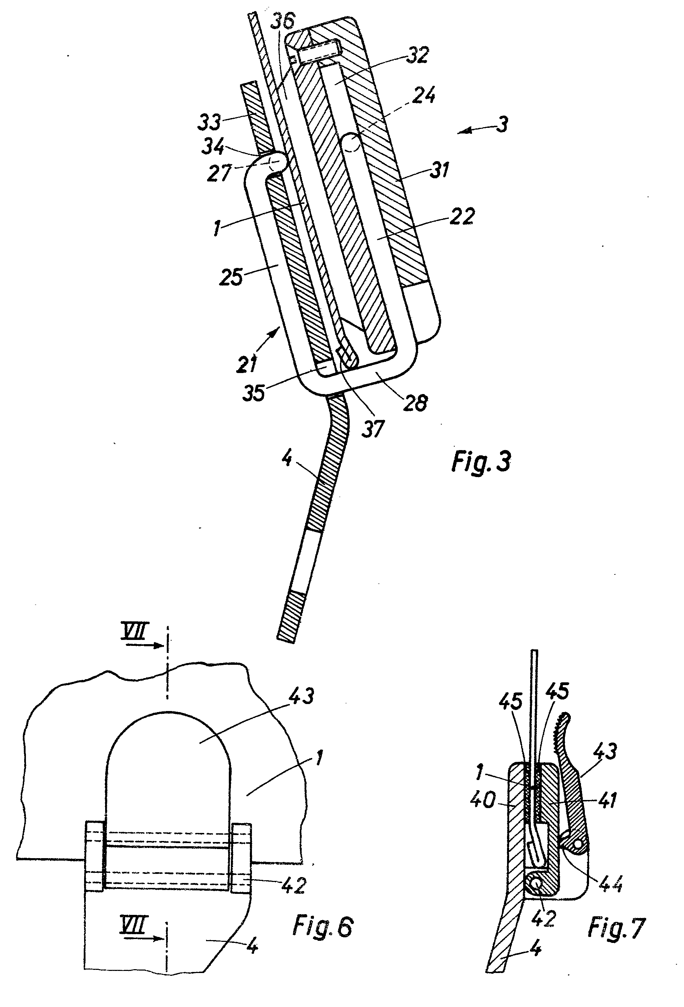

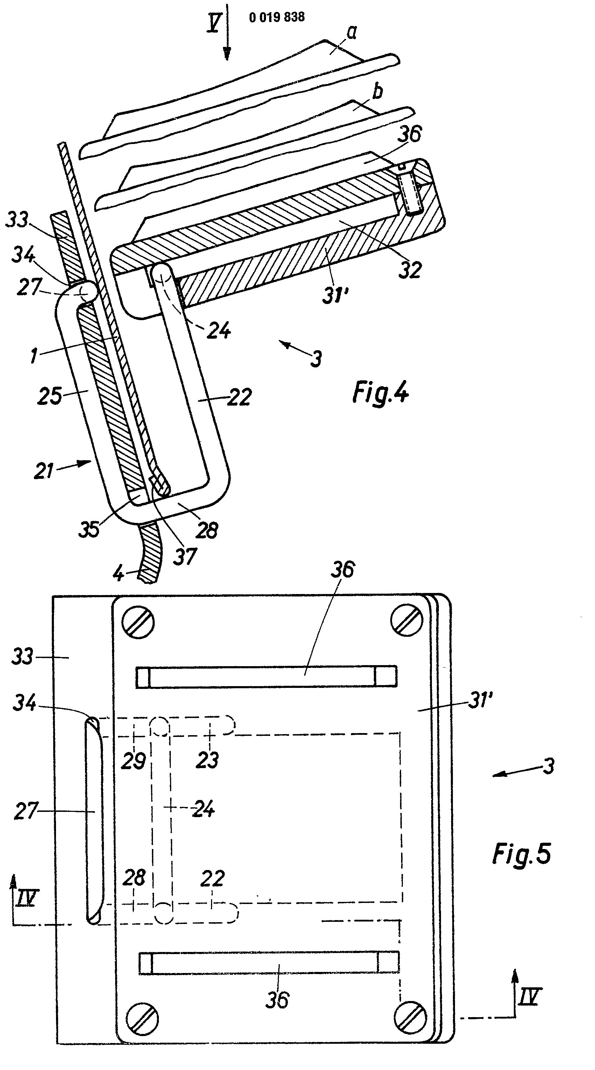

Die Fig. 3, 4 und 5 zeigen Einzelheiten der Befestigungsvorrichtung 3 (Fig. 1 und 2) in grösserem Massstab. Ein federnder, endloser Drahtbügel 21 hat einen ersten U-förmigen Teil mit Schenkeln 22 und 23 und einem diese Schenkel verbindenden Stück 24, sowie einen zweiten U-förmigen Teil mit Schenkeln 25 und 26 und einem diese Schenkel verbindenden Stück 27. Diese U-förmigen Teile sind durch Stücke 28 und 29 miteinander verbunden. Ein Schieber 31 ist aus einer ersten, in Fig. 3 gezeigten Stellung, in welcher der U-förmige Teil 22, 23, 24 in einen Hohlraum 32 des Schiebers 31 hineingreift, längs der Schenkel 22 und 23 nach oben verschiebbar und anschliessend um das Stück 24 in die mit 31' bezeichnete Stellung schwenkbar. Die Schenkel 25 und 26 des anderen U-förmigen Teils liegen an der dem Schieber 31 abgewandten Seite einer einstückig mit der Lasche 4 (vgl. auch Fig. 1 und 2) gebildeten Grundplatte 33. Das diese Schenkel 25 und 26 verbindende Stück 27 liegt in einer Rille an der anderen Seite der Grundplatte 33. Durch Löcher 35 bzw. 34 der Grundplatte 33 sind die Stücke 28, 29 bzw. die oberen Enden der Schenkel hindurchgeführt. Im gespannten Zustand der Spannvorrichtung (Fig. 3) liegt der Helmrand 1 (vgl. auch Fig. 1 und 2) zwischen dem Drahtbügelstück 27 und den am Schieber 31 vorstehenden Kufen 6, die gerade oder wie in Fig. 3 als Varianten eingetragen und mit a und b bezeichnet konkav oder keilförmig (nach unten verjüngt) und konkav sein können. Die Befestigungsvorrichtung 3 und damit die vorliegende Garnitur ist am Helm 2 mit einer durch die Federkraft des Drahtbügels 21 bestimmten Kraft festgehalten. Die Federkraft wird so bemessen, dass die Garnitur sich vom Helm 2 löst, wenn sein Träger mit der Garnitur oder mit deren Anschlusskabel 19 (Fig. 1 und 2) irgendwo hängen bleibt. Ohne diese Massnahme könnte der Benutzer in einem solchen Falle in Schwierigkeiten geraten oder den Helm verlieren, während eine Gefahr, die Atemschutzmaske 16 (Fig. 1 und 2) zu verlieren, nicht besteht, weil diese weder Teile der Garnitur enthält noch mit solchen Teilen verbunden ist, so dass sie auch bei einem Wegreissen der Garnitur nicht von dieser mitgenommen werden kann.

Diese Befestigungsvorrichtung 3 (Fig. 3, 4 und 5) löst sich auch dann zuverlässig vom Helm 2, wenn dessen Rand 1 einen Wulst hat (umgebördelt ist), wie in Fig. 3 und 4 mit 37 bezeichnet. Wenn die Befestigungsvorrichtung 3 (Fig. 3) mit einer die bestimmte Kraft überschreitenden Kraft nach unten gezogen wird, greift der Wulst 37 an der Kufe 36 an und hält den Schieber 31, während die anderen Teile der Befestigungsvorrichtung nach unten gezogen werden. Der Schieber 31 wird dabei relativ zu diesen Teilen nach oben geschoben und danach mittels des Wulstes 37 um das Drahtstück 24 in die Stellung 31' (Fig. 4) geschwenkt, woraufhin der Wulst 37 zwischen dem Drahtstück 27 und dem Schieber' hindurchgehen kann.

Damit der Benutzer die für ihn unter Umständen (z.B. für Hilferufe) lebenswichtige Garnitur, wenn sie weggerissen wurde, auch in einer nicht oder schlecht beleuchteten Umgebung wieder finden kann, ist die Garnitur zweckmässig mindestens teilweise mit einem selbstleuchtenden Überzug versehen.

Die Garnitur kann leicht am Helm 2 befestigt werden, es genügt dazu, die Befestigungsvorrichtung auf den Helmrand 1 zu schieben und den Schieber 31 vorher, gleichzeitig oder danach in die in Fig. 3 gezeigte Lage zu bringen. Zum Lösen der Garnitur mit der Befestigungsvorrichtung 3 wird der Schieber 31 von Hand in Fig. 3 nach oben geschoben und dann in seine in Fig. 4 dargestellte Lage 31' geschwenkt.

Die in Fig. 6 und 7 gezeigte, andere Ausführungsform der Spannvorrichtung hat zwei Spannbacken 40 und 41, die durch ein einachsiges Gelenk 42 miteinander verbunden sind, und einen Spannhebel 43 mit einem Nocken 44, der im gespannten Zustand gegen die eine Spannbacke 41 drückt. Die Druckflächen der Spannbacken 40, 41 sind mit einem Belag 45 überzogen, dessen Nachgiebigkeit und Reibung bei im übrigen gegebener konstruktiver Ausführung dafür massgebend sind, wie fest diese Spannvorrichtung am Helm 2 hält.

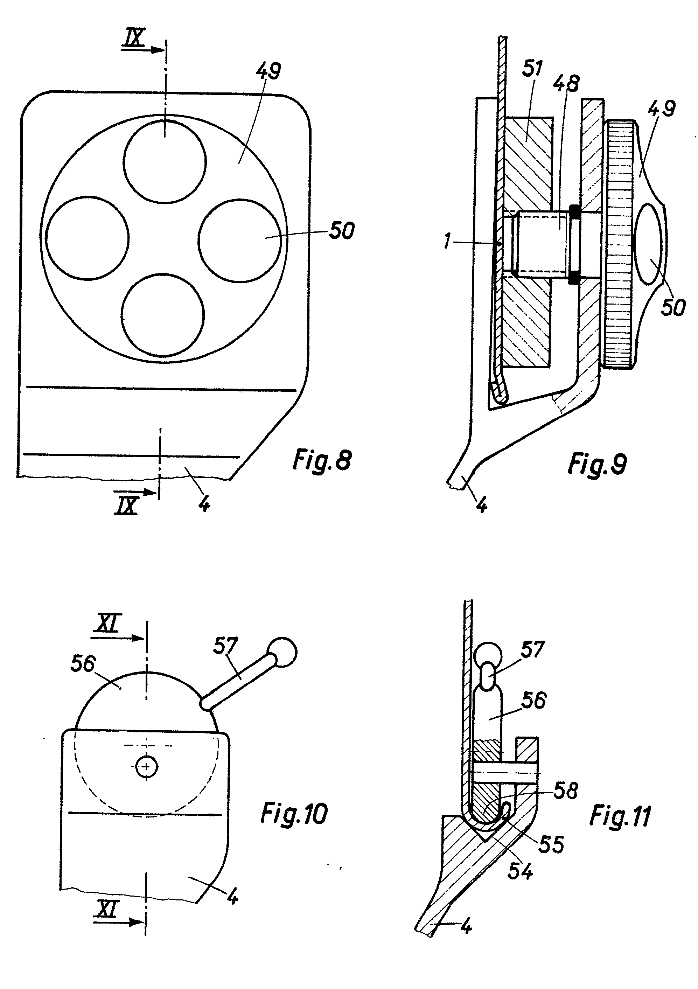

Die in Fig. 8 und 9 gezeigte, weitere Ausführungsform der Spannvorrichtung hat eine drehbar aber gegen Verschiebung gesichert gelagerte Spannschraube 48 mit einem Drehknopf 49 mit Rändelung und Vertiefungen 50 für die Fingerkuppen.

Auf dem Gewinde der Spannschraube 48 sitzt eine Druckplatte 51, die (in nicht dargestellter Weise) gegen Drehung gesichert sein kann. Auch bei dieser Ausführungsform können ein oder zwei den Belägen 45 in Fig. 6 und 7 entsprechende Beläge vorgesehen werden. Wenn diese Ausführungsform (Fig. 8 und 9) sich bei einer eine bestimmte Grenze überschreitenden Zugkraft vom Helm 2 lösen soll, ist die Drehbarkeit der Spannschraube 48 in Anzugsrichtung durch einen (nicht dargestellten) Anschlag entsprechend zu begrenzen.

Die Befestigungsvorrichtung nach Fig. 10 und 11 ist zur Verwendung an Schutzhelmen bestimmt, deren Rand etwa halbkreisförmig umgebogen ist. Sie hat eine Auflage 54 für die erhabene Seite des umgebogenen Randes 55. Diese Auflage 54 ist einstückig mit der Lasche 4 gebildet. Eine Exzenterscheibe 56 mit einer Handhabe 57 hat einen erhabenen, der hohlen Seite des umgebogenen Randes 55 im Querschnitt angepassten Rand 58. Durch Drehen der Exzenterscheibe 56 wird der umgebogene Rand 55 zwischen dieser und der Auflage 54 festgeklemmt. Diese Befestigungsvorrichtung kann sich bei einem auftretenden Zug nicht vom Helm lösen. Um die oben erwähnten Gefahren beim Hängenbleiben mit dem Anschlusskabel 19 zu vermeiden, ist dessen Anschluss am Gehäuse so auszuführen, z.B. als Brechkupplung, dass das Kabel sich bei einem eine bestimmte Grenze überschreitenden Zug vom Gehäuse löst. Ein derartig ausgebildeter Kabelanschluss kann in jedem Falle, auch dann, wenn die Klemmvorrichtung durch einen auf das Anschlusskabel ausgeübten Zug lösbar ist, als zusätzliche Schutzmassnahme vorgesehen werden.

**Patentansprüche**

1. An einem Schutzhelm (2) lösbar befestigbare Hörsprechgarnitur mit einem Wandlergehäuse (6), das mit einem biegsamen Schalleiter (7), der am freien Ende eine Einspracheöffnung (9) hat, verbunden und von einer lösbar mit dem Helmrand zu verbindenden Befestigungsvorrichtung (3) getragen ist, die ein mit der Aussenseite der Helmrandzone kraftschlüssig zu verbindendes Halteelement (36; 41; 51; 56) aufweist, dadurch gekennzeichnet, dass das Halteelement (36; 41; 51; 56) sich über einen relativ kurzen Teil des Umfangs der Helmrandzone erstreckt und dass ein zweites Halteelement (25; 40; 4; 54) vorgesehen ist, das dem ersten Halteelement (36; 41; 51; 56) gegenüber mit der Innenseite der Helmrandzone kraftschlüssig verbindbar ist, dass diese beiden Halteelemente (36; 41; 51; 56 und 25; 40; 4; 54) zum kraftschlüssigen Verbinden mit der Aussenbzw. Innenseite der Helmrandzone mittels einer Spannvorrichtung (24, 28; 43, 44; 48, 49; 56) zusammendrückbar sind, und dass das eine Mikrofonund eine Hörkapsel oder einen sowohl zur Schallaufnahme als auch zur Schallwiedergabe dienenden Wandler enthaltende, vor einem Ohr des Helmbenutzers zu tragende Wandlergehäuse (6) unterhalb der Spannvorrichtung (28; 43, 44; 48, 49; 56) angeordnet und mit dieser durch ein Gelenk (5) verbunden ist, dessen Achse wenigstens annähernd parallel zum Helmrandzonenradius verläuft.

2. Garnitur nach Anspruch 1 mit einer Hörkapsel und einer Mikrofonkapsel, dadurch gekennzeichnet, dass die Hörkapsel im in Gebrauchslage der Garnitur oberen Teil (11) und die Mikrofonkapsel im in dieser Gebrauchslage unteren Teil (13) des Gehäuses (6) angeordnet ist.

3. Garnitur nach Anspruch 1 oder 2, dadurch gekennzeichnet, dass das Gehäuse (6) am in Gebrauchslage der Garnitur unteren Ende mit dem Schalleiter (7) gelenkig (8) verbunden ist.

4. Garnitur nach Anspruch 3, dadurch gekennzeichnet, dass wenigstens eines der Gelenke (5, 8) mit Bremsreibung ausgeführt oder mit einer Rastvorrichtung versehen ist.

5. Garnitur nach einem der Ansprüche 1 bis 4, dadurch gekennzeichnet, dass ein fest mit der Befestigungsvorrichtung (3) verbundener Ansatz (4) und das akustisch mit der Mikrofonkapsel bzw. dem sowohl zur Schallaufnahme als auch zur Schallwiedergabe dienenden Wandler verbundene Ende des Schalleiters (7) an der in Gebrauchslage der Garnitur dem Kopf (12) des Trägers des Helmes (2) abgewandten Seite des Gehäuses (6) angebracht, insbesondere angelenkt sind.

6. Garnitur nach einem der Ansprüche 1 bis 5, dadurch gekennzeichnet, dass das Gehäuse (6) zwischen seinem in Gebrauchslage der Garnitur oberen und unteren Teil (11 und 13) gekröpft (14) ist, derart, dass der untere Teil (13) zum oberen (11) in bezug auf den Kopf (12) des Trägers des Helmes (2) nach aussen versetzt ist.

7. Garnitur nach einem der Ansprüche 1 bis 6, dadurch gekennzeichnet, dass das Gehäuse (6), vorzugsweise neben der Kröpfung (14), eine grossflächige, ballige Sprechtaste (17) hat.

8. Garnitur nach einem der Ansprüche 1 bis 7, dadurch gekennzeichnet, dass das Gehäuse (6) der Garnitur in deren Gebrauchslage einen Abstand vom Kopf (12) des Trägers des Helmes (2) hat.

9. Garnitur nach einem der Ansprüche 1 bis 8, dadurch gekennzeichnet, dass durch eine auf das Anschlusskabel (19) der Garnitur ausgeübte Zugkraft, die eine vorbestimmte Kraft überschreitet, die an den Helm geklemmte Befestigungsvorrichtung (3) vom Helm (2) lösbar und/oder das Anschlusskabel (19) von der Garnitur lösbar ist.

10. Garnitur nach einem der Ansprüche 1 bis 9, dadurch gekennzeichnet, dass das Gehäuse einen Sprechfunksender und -empfänger enthält, dessen Antenne entweder im Gehäuse untergebracht ist oder aus diesem herausragt oder mit einer zweiten, am Helm lösbar festklemmbaren Befestigungsvorrichtung versehen ist.

11. Garnitur nach Anspruch 10, dadurch gekennzeichnet, dass die Befestigungsvorrichtung, mittels welcher die Antenne am Helm lösbar festklemmbar ist, durch übermässige Beanspruchung ihrer Klemmverbindung vom Helm lösbar ist.

12. Garnitur nach einem der Ansprüche 1 bis 11, dadurch gekennzeichnet, dass die Befestigungsvorrichtung (3) zwei durch ein einachsiges Gelenk (42) miteinander verbundene Klemmbacken (40, 41) hat, die mittels eines Spannhebels (43) zusammendrückbar sind (Fig. 6 und 7).

13. Garnitur nach einem der Ansprüche 1 bis 11, dadurch gekennzeichnet, dass die Befestigungsvorrichtung (3) zwei mittels einer Spannschraube (48) zusammendrückbare Klemmbacken hat (Fig. 8 und 9).

14. Garnitur nach einem der Ansprüche 1 bis 11, dadurch gekennzeichnet, dass die Befestigungsvorrichtung (3) zur Verwendung an einem Helm mit annähernd halbkreisförmig umgebogenem Rand (55) eine Auflage (54) für die erhabene Seite des Randes (55) und eine drehbare, mit einer Handhabe (57) versehene Exzenterscheibe (56) mit einem erhabenen, der hohlen Seite des Helmrandes (55) wenigstens annähernd angepassten Randquerschnitt (58) hat (Fig. 10 und 11).

## Claims

1. A mikrophone/receiver assembly detachedly securable to a protective helmet (2) and having a transformer housing (6) connected to a flexible sound conductor (7) having a speech receiver opening (9) at its free end, the assembly being carried by a fastening device (3) which is to be releasably connected to the edge of the helmet and which has a retaining element (36; 41; 51; 56) which is to be firmly held by a friction fit against the outside of the edge zone of the helmet, characterised in that the retaining element (36; 41; 51; 56) extends over a relatively short region of the edge zone of the helmet, in that a second retaining element (25; 40; 4; 54) is provided which is connectable by a friction fit to the inside of the edge zone of the helmet opposite the first retaining element (36; 41; 51; 56), in that these two retaining elements (36; 41; 51; 56 and 25; 40; 4; 54) can be pressed together by means of a clamping device (24, 28; 43, 44; 48, 49; 56) to bring about the friction fit to the outside and inside of the edge zone of the helmet, and in that the transformer housing (6), which contains a microphone capsule and a listening capsule or a transformer serving for both sound pick-up and sound reproduction and which is to be worn in front of one ear of the helmet wearer, is arranged underneath the clamping device (28; 43, 44; 48, 49; 56) and is connected to this by a pivot (5) the axis of which extends at least approximately parallel to the edge zone radius of the helmet.

2. An assembly according to claim 1 having a listening capsule and a microphone capsule, characterised in that, in the operative position of the set, the listening capsule is arranged in the upper part (11) of the housing (6) and the microphone capsule is arranged in the lower part (13) thereof.

3. An assembly according to claim 1 or 2, characterised in that the lower end of the housing (6) is connected by a pivot (8) to the sound conductor (7) in the position of the set.

4. An assembly according to claim 3, characterised in that at least one of the pivots (5, 8) is designed with braking friction or is provided with a detent device.

5. An assembly according to one of claims 1 to 4, characterised in that an adjcount-piece (4) which is connected securely to the fastening device (3) and that end of the sound conductor (7) which is connected acoustically to the microphone capsule or to the transformer serving both for sound pick-up and sound reproduction are both mounted, preferably pivoted, on that side of the housing (6) which, in the operative position of the set, is averted from the head (12) of the wearer of the helmet (2).

6. An assembly according to one of claims 1 to 5, characterised in that the housing (6) is cranked (14) between its upper and lower parts (11 and 13) in the operative position of the set in such a way that the lower part (13) is offset outwardly relative to the upper one (11) in relation to the head (12) of the wearer of the helmet (2).

7. An assembly according to one of claims 1 to 6, characterised in that the housing (6) has a crowned speaking key (17) of large area, preferably located beside the crank (14).

8. An assembly according to one of claims 1 to 7, characterised in that, in its operative position, the housing (6) of the set is spaced apart from the head (12) of the wearer of the helmet (2).

9. An assembly according to one of claims 1 to 8, characterised in that, when a tractive force exceeding a predetermined limit is exerted on a connecting cable (19) of the set, the fastening device (3) clamped to the helmet is releasable from the helmet (2) and/or the connecting cable (19) is releasable from the set.

10. An assembly according to one of claims 1 to 9, characterised in that the housing contains a radiotelephone transmitter and receiver, the antenna of which is either accommodated in the housing or juts out therefrom or is provided with a second fastening device which may be releasably clamped to the helmet.

11. An assembly according to claim 10, characterised in that the fastening device by means of which the antenna may be releasably clamped to the helmet is releasable from the helmet upon excessive stressing of its clamping connection.

12. An assembly according to one of claims 1 to 11, characterised in that the fastening device (3) has two clamping jaws (40, 41) which are connected to one another by a uniaxial hinge (42) and which can be pressed together by means of a clamping lever (43) (Figs. 6 and 7).

13. An assembly according to one of claims 1 to 11, characterised in that the fastening device (3) has two clamping jaws which can be pressed together by means of a clamping screw (48) (Figs. 8 and 9).

14. An assembly according to one of claims 1 to 11, characterised in that the fastening device (3), for use on a helmet having an edge (55) which is bent over in an approximately semicircular manner, has a support (54) for the raised side of the edge (55) and a rotatable eccentric disc (56) provided with a handle (57) and having a cross-section (58) at the raised edge which is adapted at least approximately to the hollow side of the edge (55) of the helmet (Figs. 10 and 11).

## Revendications

1. Garniture de réception-émission pouvant être fixée de façon amovible sur un casque de protection (2), comportant un boîtier de transducteur (6) qui est relié à un conducteur acoustique souple (7) qui comporte à l'extrémité libre une ouverture (9) de pavillon de microphone et est supporté par un dispositif de fixation (3), devant être accouplé de façon amovible au bord du casque, qui comporte un élément de maintien (36; 41; 51; 56) devant être accouplé, sous l'action d'une force, au côté extérieur de la zone marginale du casque, caractérisée par le fait que l'élément de retenue (36; 41; 51; 56) s'étend suivant une partie relativement courte de la périphérie de la zone marginale du casque, et qu'il est prévu un second élément de retenue (25; 40; 4; 54) qui peut être accouplé, sous l'action d'une force, au côté intérieur de la zone marginale du casque, en face du premier élément de retenue (36; 41; 51; 56), que ces deux éléments de retenue (36; 41; 51; 56 et 25; 40; 4; 54) pour l'accouplement sous l'action d'une force peuvent être pressés contre le côté extérieur ou intérieur de la zone marginale du casque au moyen d'un dispositif de serrage (24; 28; 43, 44; 48, 49; 56), et que le boîtier de transducteur (6), devant être porté devant une oreille de l'utilisateur du casque et contenant une capsule de microphone et une capsule réceptrice ou un transducteur servant aussi bien à la réception du son qu'également à la restitution du son, est disposé au-dessous du dispositif de serrage (28; 43, 44; 48, 49; 56) et est couplé à celui-ci par une articulation (5) dont l'axe est au moins approximativement parallèle au rayon de la zone marginale du casque.

2. Garniture suivant la revendication 1, comportant une capsule réceptrice et une capsule de microphone, caractérisée par le fait que la capsule réceptrice est disposée dans la partie supérieure (11), dans la position d'utilisation de la garniture, et la capsule de microphone est disposée dans la partie inférieure (13), dans cette position d'utilisation, du boîtier (6).

3. Garniture suivant la revendication 1 ou 2, caractérisée par le fait que le boîtier (6) est couplé de façon articulée (8) au conducteur acoustique (7) au niveau de l'extrémité inférieure dans la position d'utilisation de la garniture.

4. Garniture suivant la revendication 3, caractérisée par le fait qu'au moins une des articulations (5, 8) est réalisée avec un frottement de freinage ou est munie d'un dispositif d'encliquetage.

5. Garniture suivant l'une des revendications 1 à 4, caractérisée par le fait qu'un appendice (4), couplé rigidement au dispositif de fixation (3), et l'extrémité du conducteur acoustique (7), couplée à la capsule de microphone ou au transducteur servant aussi bien à la réception du son qu'également à la restitution du son, sont disposés, notamment articulés, sur le côté du boîtier (6) qui est opposé à la tête (12) du porteur du casque (2) dans la position d'utilisation de la garniture.

6. Garniture suivant l'une des revendications 1 à 5, caractérisée par le fait que le boîtier (6) est coudé (14) entre ses parties supérieure et inférieure (11 et 13) dans la position d'utilisation de la garniture, de manière que la partie inférieure (13) soit décalée vers l'extérieur vis-à-vis de la partie supérieure (11), par rapport à la tête (12) du porteur du casque (2).

7. Garniture suivant l'une des revendications 1 à 6, caractérisée par le fait que le boîtier (6) comporte une touche de parole (17) de surface importante et de forme renflée, de préférence à côté du coude (14).

8. Garniture suivant l'une des revendications 1 à 7, caractérisée par le fait que le boîtier (6) de la garniture est situé à une certaine distance de la tête (12) du porteur du casque (2) dans sa position d'utilisation.

9. Garniture suivant l'une des revendications 1 à 8, caractérisée par le fait que, sous l'effet d'une force de traction, exercée sur le câble de raccordement (19) de la garniture, qui dépasse une force prédéterminée, le dispositif de fixation (3) serré sur le casque peut être défait du casque (2) et/ou le câble de raccordement (19) peut être défait de la garniture.

10. Garniture suivant l'une des revendications 1 à 9, caractérisée par le fait que le boîtier contient un émetteur-récepteur de radiotéléphonie dont l'antenne est soit logée dans le boîtier soit ressort de celui-ci, ou est munie d'un second dispositif de fixation pouvant être fixé de façon amovible sur le casque.

11. Garniture suivant la revendication 10, caractérisée par le fait que le dispositif de fixation, au moyen duquel l'antenne peut être fixée de façon amovible sur le casque, peut être détachée du casque par une sollicitation excessive de son accouplement par serrage.

12. Garniture suivant l'une des revendications 1 à 11, caractérisée par le fait que le dispositif de fixation (3) comporte deux mâchoires de serrage (40, 41), réunies l'une avec l'autre par une articulation (42) à axe unique, qui peuvent être pressées l'une contre l'autre au moyen d'un levier de serrage (43) (figs 6 et 7).

13. Garniture suivant l'une des revendications 1 à 11, caractérisée par le fait que le dispositif de fixation (3) comporte deux mâchoires de serrage qui peuvent être serrées l'une contre l'autre au moyen d'une vis de serrage (48) (figs 8 et 9).

14. Garniture suivant l'une des revendications 1 à 11, caractérisée par le fait que le dispositif de fixation (3) pour l'utilisation sur un casque comportant un bord replié (55) approximativement en forme de demicercle comporte un appui (54) pour le côté proéminent du bord (55) et un disque d'excentrique (56), pouvant tourner et muni d'une poignée (57), qui possède une section transversale marginale proéminente (58) adaptée au moins approximativement au côté creux du bord (55) du bord du casque (figs 10 et 11).

Fig.1

Fig. 2

Fig. 3

Fig. 6

Fig. 7

0 019 838

**Fig.4**

**Fig.5**

0 019 838

Fig.8

Fig.9

Fig.10

Fig.11

17